# EUROPEAN PATENT APPLICATION

(11) **EP 2 701 364 A1**
(43) Date of publication of application: **26.02.2014**
(21) Application number: 12181758.9
(22) Date of filing: 24.08.2012
(51) Int. Cl.: H04L 29/08, H04W 24/02

(54) **Method and apparatus for providing content delivery over a wireless mesh network**

(71) Applicant: La Citadelle Inzenjering d.o.o., 21000 Novi Sad (RS)
(72) Inventor: Boskovic, Dragan, Arandjelovac (RS); Tosic, Milenko, Zabalj (RS); Cirilovic, Mirko, Rumenka (RS); Ikovic, Ognjen, Novi Sad (RS)
(74) Representative: Wray, Antony John

(57) **Abstract**

A content delivery network (CDN) management system is described. The CDN management system is arranged to receive at least one request for content from at least one end user device connected to a wireless mesh network (WMN) and in response thereto determine a set of content source nodes for providing the requested content, and configure an opportunistic, CDN overlay on top of the WMN for delivery of the requested content to the at least one end user device.

## Description

### Field of the invention

This invention relates to a method and apparatus for providing content delivery over a wireless mesh network, and in particular to a content delivery network (CDN) management system and method therefor.

### Background of the invention

The Internet has evolved to be the most significant information exchange medium, and is burdened with high expectations in terms of performance and support requirements for new applications and services. The capacity of the modern Internet infrastructure is mainly consumed by video traffic, which is a direct consequence of technological advances in video capturing and conditioning for consumption on personal and portable devices.

With the advent of large screen smart phones and tablets, video streaming to such mobile devices is becoming a dominant service for cellular networks, and it demand is such that it is stressing cellular network infrastructures. Conventionally, to cope with such growth in network resource demands requires costly upgrades into the core of wireless access networks that cellular operators are only too keen to avoid. As an alternative to such costly upgrades, cellular operators they are looking into the possibility of creating IP based network overlays based on inexpensive and now ubiquitously available wireless local area network (WLAN) technology that would act as wireless Content Delivery Network (wCDN).

Although WLANs provide easily deploy-able, maintainable and scalable Internet access, they are often very congested and subject to interference due to the open nature of the wireless medium. The more WLAN nodes that are located within a given geographical area, the higher the level of mutual interference. For these reasons there is a strong need for innovative ways to keep concentration and spatial density of WLAN nodes to a minimum while at the same time maximizing cooperation of these nodes in terms of resource sharing through virtualization.

A conventional content delivery network (CDN) typically comprises a collection of 'local' servers, each of which contain full or partial replicas of content stored on an origin server. When a local request for the content cannot be fulfilled from a dedicated local server, it will be forwarded to the origin server.

Hierarchical replica servers were subsequently introduced, as described in [1] Khan Pathan, A. M., Buyya, R.: A Taxonomy and Survey of Content Delivery Networks. Technical Report GRIDS-TR, University of Melbourne, April 2010, which is incorporated by reference herein. Several hierarchical layers may be formed within a CDN system, whereby a user's request for content is forwarded from lower layers to the upper ones, and all the way to the origin server in case of the cache miss for particular content, until the user's request is able to be fulfilled. These content delivery approaches resulted in poor storage resource utilization, because in order to achieve lower a number of cache misses, the same content had to be replicated over as many replica servers as possible.

The next evolutionary step was the introduction of peer to peer (p2p) communication among CDN replica servers. This allowed CDN servers to address each other's cache misses. As the users' requests became more demanding, CDN systems had to include more and more dedicated replica servers and bring the content closer to the end users. This trend led to a proposal of hybrid CDN solutions, incorporating p2p content delivery among end users into the standard CDN framework. There are many systems proposing this type of CDN solutions, such as:
- [2] Coppens, J., Wauters, T., De Turck, F., Dhoedt, B., Demeester, P.: Design and Performance of a Self-Organizing Adaptive Content delivery Network. 10th IEEE/IFIP Network Operations and Management Symposium, Vancouver (2006) pp. 534 - 545;
- [3] Skevik, K. A., Goebel, V., Plagemann, T.: Evaluation of a Comprehensive P2P Video-on-Demand Streaming System. Computer Networks no. 53, Elsevier (2009) pp. 434-455;
- [4] Lee, C. N., Kao, Y. C., Tsai, M. T.: A vEB-Tree-Based Architecture for Interactive Video on Demand Services in Peer-to-Peer networks. Journal of Network and Computer Applications no. 33, Elsevier (2010) pp. 353-362;
- [5] Wah Yim, A. K., Buyya, R.: Decentralized Media Streaming Infrastructure (DeMSI): An Adaptive and High-Performance Peer-to-Peer Content Delivery Network. Journal of Systems Architecture no. 52, Elsevier (2006) pp. 737-772;
- [6] EU grant no. FP7-ICT-216217: Next Generation Peer-to-Peer Content Delivery Platform (P2P-NEXT). http://www.p2p-next.org/, last visited on 24.02.2012.

Each of the above publications is incorporated by reference herein.

The next step was the introduction of highly distributed CDN clouds, as described in [7] Pathan, M., Broberg, J., Buyya, R.: Maximizing Utility for Content Delivery Clouds. 10th International Conference on Web Information Systems Engineering, Springer-Verlag Berlin, Heidelberg (2009), which is incorporated by reference herein.

A further proposal is the concept of content centric networking (CCN), as described in [8] Jacobson, V.; Smetters, D. K.; Thornton, J. D.; Plass, M. F.; Briggs, N.; Braynard, R.: Networking named content. Proceedings of the 5th ACM International Conference on Emerging Networking Experiments and Technologies, Rome, Italy. NY: ACM (2009) pp. 1-12, and also in [9] Borcoci, E., Negru, D., Timmerer, C.: A Novel Architecture for Multimedia Distribution Based on Content-Aware Networking. 3rd international conference on Communication Theory, Reliability, and Quality of Service (2010) pp. 162-168, both of which are incorporated by reference herein. The governing philosophy of the concept of content centric networking argues that a communication network should support a user's focus on the content needed without the need to specify physical location from where to get the requested content.

In addition, there are previous research efforts towards proposing the content placement on wireless mesh network (WMN) nodes. Work described in [10] Dogar, F., Phanishayee, A., Pucha, H., Ruwase, 0., Andresen, D.: Ditto- A System for opportunistic Caching in Multi-Hop Wireless Networks. Proceedings of the 14th ACM international conference on Mobile computing and networking (MobiCom '08), ACM New York (2008), incorporated by reference herein, addresses the problem of content placement on the nodes (e.g. access points) of a WMN, and shows how this approach can result in significant improvements of a WMN's bandwidth resources utilization, which increases the overall content delivery capacity of the underlying WMN. Content placement is done in an "on-path" manner, which means that content is placed on WMN nodes when it passes through them.

The authors in [11] Conti, M., Giordano, S., May, M., Passarella, A.: From Opportunistic Networks to Opportunistic Computing. IEEE Communications Magazine vol. 48 no. 9 IEEE (2010) pp. 126-139, incorporated by reference herein, have provided extensive research with respect to the definition, algorithms and applications of opportunistic networks. Opportunistic networks (ONs) have the ability to exploit, in a temporary manner, the communication, computing or storage resources of neighbouring terminals in a specific service area. As such, users are able to use, upon request, the extra resources available in peer devices in order to be served with better Quality of Service (QoS) compared to, say, the QoS obtained from congested infrastructure elements. The notion of operator-governed peer-to-peer ONs is also introduced and elaborated on in [12] EU grant no. FP7-ICT-257385 - OneFIT: Opportunistic Networks and Cognitive Management Systems for Efficient Application Provision in the Future Internet (available online at: www.ict-onefit.eu), incorporated by reference herein. In this approach, operators have the control of the ONs created across end user terminals and infrastructure elements in their service area in order to decide on the creation, maintenance/reconfiguration or termination of an ON. Operator governance is being realized through the introduction of cognitive management systems which acquire context, profile, policy information and decide on the potential creation, maintenance or termination of ONs according to the rules dictated by the operator.

A problem with such known and proposed CDN network approaches is that, where content is delivered from dedicated servers located in the core network, they suffer from problems that are typical for content delivery over wireless mesh networks. These WMNs, when compared to cable networks, are considered as bottlenecks for content delivery service. This is due to the fact that all of the communication is done over a limited number of WMN gateways (GWs). Backhaul radio links, created by radio interfaces of WMN GWs, are shared among all other WMN nodes. Therefore, these links would most likely suffer from congestion resulting in limited capacity of the WMN, which is less than the capacity provided by the radio network (maximal capacity which could be achieved without interference and sharing of radio resources). In order to provide efficient CDN service using the WMNs as a last mile access networks, intelligent management of available resources needs to be provided.

Inclusion of the end users into the CDN system, for example incorporating p2p content delivery among end users, brings the content into the user plain. Enabling end users to share content stored on their devices among themselves in a p2p manner can significantly increase capacity of the underlying access network. However, in case of WMNs all communication among end users has to be done through WMN GWs, therefore limitations imposed by the WMN technology persist. By providing direct WLAN-like services, such as implemented using Wi-Fi Direct (a standard developed by the Wi-Fi Alliance that allows Wi-Fi devices to connect to each other without the need for a wireless access point), users would be able to share content with other users in their WMN subnet without the need to go through dedicated GWs (if not in each other's range, users could share content over the WMN APs to which they are connected). However, the main challenge in these solutions is management of end user's resources and content stored on their devices. The security risks, guaranteed resource availability, users' incentives and highly distributed nature of the system are still limiting the practical implementation of such solutions.

Placing the content, available on the source/dedicated server, on the WMN nodes (APs and GWs) would bring the content as close to the end users as possible while enabling operators (service providers) complete control over the storage space, stored content and delivery process. Current approaches (such as described in [10] above) propose storing requested content within WMN nodes which are on route from requesting users to their respective dedicated GW, thereby making such requested content available for subsequent requests routed via those WMN nodes. However, such approaches are limited in that content is only made locally available in a vertical manner within the WMN; that is to say, the stored content is subsequently only available locally to end users who access the GWs through routing paths which include WMN nodes with stored content. As such, the effectiveness of such approaches is limited.

### Summary of the invention

Accordingly, the invention seeks to mitigate, alleviate or eliminate one or more of the abovementioned disadvantages singly or in any combination.

In accordance with a first aspect of the invention, there is provided a content delivery network (CDN) management system. The CDN management system is arranged to receive at least one request for content from at least one end user device connected to a wireless mesh network (WMN), determine a set of content source nodes for providing the requested content, and configure an opportunistic CDN overlay on top of the WMN for delivery of the requested content to the at least one end user device.

In one optional embodiment, the set of content source nodes may comprise at least one from a group comprising: at least one WMN node; and at least one content origin server.

In one optional embodiment, the CDN management system may be arranged to determine the set of content source nodes for providing the requested content based at least partly on a determination of whether at least a part of the requested content is available locally within the WMN.

In one optional embodiment, the CDN management system may be arranged to determine the set of content source nodes for providing the requested content based at least partly on a Quality of Service (QoS) estimation for at least one candidate content source node.

In one optional embodiment, the CDN management system may be arranged to determine the set of content source nodes for providing the requested content based at least partly on at least one from a group comprising: a distance in a topology of the WMN from a WMN node, to which the requesting end user device is connected, to at least one candidate content source node; and a predicted mobility pattern for the end user device.

In one optional embodiment, the CDN management system may be arranged to configure an opportunistic CDN overlay on top of the WMN for delivery of the requested content to the at least one end user device by reconfiguring at least one candidate WMN access point node into a WMN gateway node.

In one optional embodiment, the CDN management system may be arranged to select the at least one candidate WMN access point node to be reconfigured into a WMN gateway node from a list of candidate WMN access point nodes, based at least partly on a QoS estimation therefor.

In one optional embodiment, the CDN management system may be arranged to configure an opportunistic CDN overlay on top of the WMN for delivery of the requested content to the at least one end user device by creation of at least one additional backhaul link for bridging node clusters within the WMN.

In one optional embodiment, the CDN management system may be arranged to select candidate WMN nodes to be reconfigured to create the at least one additional backhaul link for bridging node clusters within the WMN from a list of candidate WMN nodes based at least partly on a QoS estimation therefor.

In one optional embodiment, the CDN management system may be arranged to derive content distribution knowledge comprising at least one from a group comprising: at least one request parameter; at least one WMN storage pool status parameter; at least one wireless interfaces parameter; at least one WMN node location parameter; at least one WMN node capability parameter; and at least one WMN node remote re-configurability parameter, said derived content distribution knowledge comprising at least one from a group comprising: request distribution for content; content popularity; user mobility patterns; updates of user profiles; content distribution over WMN nodes; traffic patterns and load balancing; network topology; location profile; possibilities for multipath routing; and gateway candidates.

In one optional embodiment, the CDN management system may be arranged to determine a set of content source nodes for providing the requested content based at least partly on the derived content distribution knowledge.

In one optional embodiment, the CDN management system may be arranged to proactively pre-place at least one data content segment within at least one selected WMN node based at least partly on the derived content distribution knowledge.

In accordance with a second aspect of the present invention, there is provided a content delivery system comprising a CDN management system according to the first aspect of the invention.

In accordance with a third aspect of the invention, there is provided a method for providing content delivery over a wireless mesh network (WMN). The method comprises receiving at least one request for content from at least one end user device connected to the WMN, determining a set of content source nodes for providing the requested content, and configuring an opportunistic CDN overlay on top of the WMN for delivery of the requested content to the at least one end user device.

In accordance with a fourth aspect of the invention, there is provided a non-transitory computer program product having executable program code stored therein for programming signal processing logic to perform the method of the fourth aspect of the invention.

These and other aspects, features and advantages of the invention will be apparent from, and elucidated with reference to, the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified block diagram of an example of a wireless content delivery system.
FIG. 2 illustrates a simplified block diagram of the system used for providing content delivery over a wireless mesh network.
FIG's 3 to 6 illustrate simplified flowcharts of an example of a method of providing content delivery over a wireless mesh network.
FIG. 7 illustrates a simplified block diagram of an example of video file content divided into chunks.
FIG. 8 illustrates a simplified diagram of the usage of different sets of context parameters for the derivation of different knowledge.

### Detailed description

The present invention will now be described with reference to one example embodiment. However, it will be appreciated that the present invention is not limited to the specific embodiment herein described and illustrated in the accompanying drawings. Furthermore, because the illustrated embodiments of the present invention may for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

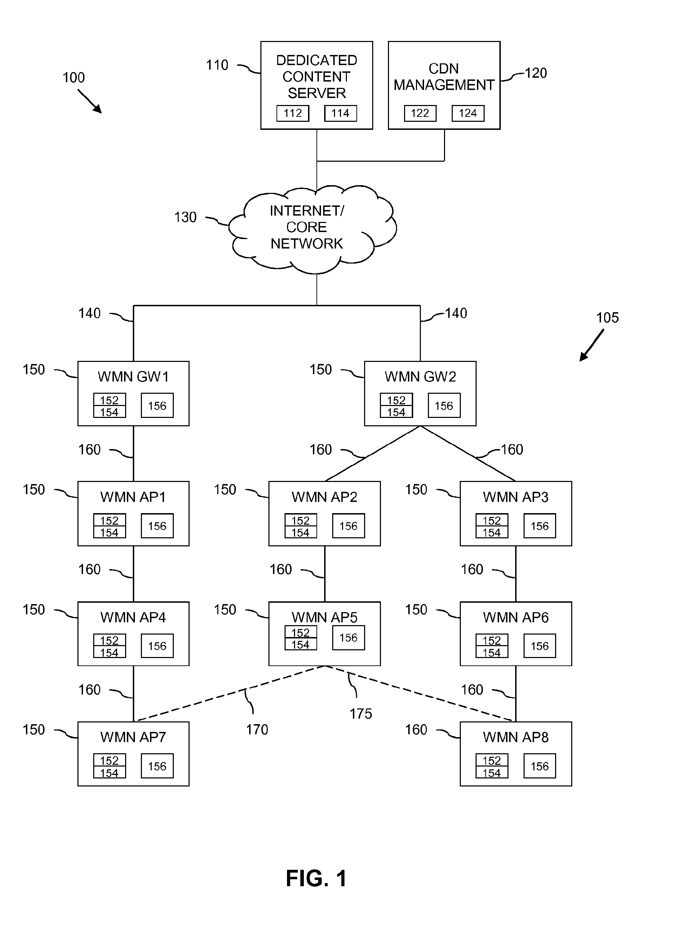

Referring first to FIG. 1, there is illustrated a simplified block diagram of an example of (at least a part of) a content delivery system 100. In the illustrated example, the content delivery system 100 comprises a wireless mesh network (WMN) 105 to which end user devices (not shown) are able to connect and request content to be delivered via the content delivery system 100. The WMN 105 is operably coupled to one or more content origin servers, such as the dedicated content server illustrated generally at 110. Content that is available to end user devices is stored within the content origin server(s) 110, for example within one or more storage devices such as illustrated generally at 114. In the illustrated example, the WMN 105 is operably coupled to the content origin server(s) 110 via the Internet, or other form of core network infrastructure, as illustrated generally at 130. In this manner content may be requested from the content origin server 110, and delivered to end user devices connected to the WMN 105 via the Internet/Core network 130 and WMN 105. For completeness, the content origin server(s) comprises processing logic, illustrated generally at 112, for receiving and processing received content requests, etc.

The WMN 105 comprises a plurality of nodes, indicated at 150. In the illustrated example, each WMN node 150 comprises at least one signal processing module 152 for executing computer program code thereon; at least one memory element 154 for storing therein computer program code to be executed and/or for storing data content etc; and at least one wireless transceiver module 156 for enabling wireless communication with one or more further WMN nodes and one or more end user devices (not shown). The WMN nodes 150 may be arranged into one or more 'clusters'. For example, in the illustrated example, the WMN nodes 150 are arranged into two clusters; a first cluster comprising a first WMN node GW1 150 configured as a gateway (GW) node and three further WMN nodes AP1, AP4, AP7 150 configured as WMN access point (AP) nodes; and a second cluster comprising a first WMN node GW2 150 configured as a GW node and five further WMN nodes AP2, AP3, AP5, AP6, AP8 150 are configured as WMN AP nodes.

In the first cluster, the GW node GW1 is operably coupled to the content origin server 110, via the Internet/Core network 130, for example via a broadband connection 140 or the like. Wireless backhaul links 160 are configured between GW node GW1 and AP node AP1; AP node AP1 and AP node AP4; and AP node AP4 and AP node AP7 respectively. In the second cluster, the GW node GW2 is also operably coupled to the content origin server 110 via a broadband connection 140 or the like. The AP nodes in the second cluster are further arranged into two sub-clusters. The first sub-cluster comprises AP nodes AP2 and AP5, with wireless backhaul links 160 being configured between GW node GW2 and AP node AP2, and between AP nodes AP2 and AP5. The second sub-cluster comprises AP nodes AP3, AP6, and AP8, with wireless backhaul links 160 being configured between GW node GW2 and AP node AP3; AP nodes AP3 and AP6; and AP nodes AP6 and AP8. In this manner, each AP node is connected to the Internet/core network, and thus the content origin server(s) 110, via a respective GW node GW1/GW2. As such, the AP nodes may be considered to be configured as 'single-homed' nodes, since they are connected to the internet/core network via a single GW node.

The content delivery system 100 further comprises a content delivery network (CDN) management system 120, which is described in greater detail below.

Wireless mesh networks, such as the WMN 105 illustrated in FIG. 1, provide a cheap, easily deployable, maintainable and scalable means of end user device access to the Internet or the like. Nevertheless, high transfer throughput is a must for WMNs in order to successfully compete with other 'last-mile' wireless technologies. However, conventional WMNs, when compared to cable networks, are considered as bottlenecks for content delivery services. This is due to the fact that all of the communication is done over a limited number of WMN gateways (GWs). Backhaul radio links 160 created by radio interfaces of WMN GWs are shared among all other WMN nodes. As a result, these links suffer from congestion resulting in limited capacity of the WMN 105, which is less than the capacity provided by the radio network (maximal capacity which could be achieved without interference and sharing of radio resources).

Maintaining a high transfer throughput in WMNs is difficult because these networks, as with all other wireless networks, are subject to interference due to the open nature of the wireless medium, and the sharing of available resources among network nodes. Radio interference can affect WMN performance in several ways:
i. Higher 'hop count' (i.e. the number of wireless backhaul links that need to be traversed) from source to destination is likely to lower the overall path's throughput since hops may need to share radio resources;
ii. Packet loss on a given path is proportional to the number of hops and consequently lowers the throughput;
iii. Many mesh paths congregate on a single WMN gateway (GW) thus increasing probability of interference in vicinity of the gateways; and
iv. WMN nodes which are at the edge of the network's topology (so called leaf nodes) are subject to limited capacity of the backhaul paths towards dedicated GWs.

In order to provide efficient CDN service using the WMNs as a last mile access networks, intelligent management of available resources needs to be provided.

As previously identified in the background of the invention, placing content, available on the content origin server(s) 110, on the WMN nodes (APs and GWs) 150 would bring the content as close to the end users as possible, while enabling operators (service providers) complete control over the storage space, stored content and delivery process. Current approaches propose storing requested content within WMN nodes 150 which are on route from requesting users to their respective dedicated GW nodes, thereby making such requested content available for subsequent requests routed via those WMN nodes 150. However, such approaches are limited in that content is only made locally available in a vertical manner within the WMN 105; that is to say, the stored content is subsequently only available locally to end user devices whose connection with WMN GWs is provided via the WMN nodes with stored content. As such, the effectiveness of such approaches is limited.

Examples of the present invention propose a method and apparatus for providing content delivery over a wireless mesh network comprising, in response to the receipt of a request for content from an end user device connected to the WMN 105, determining a set of content source nodes for providing the requested content, and configuring an opportunistic, knowledge based content delivery network (CDN) on top of the WMN 105 for providing context aware delivery of the requested content to the end user device from which the request was received.

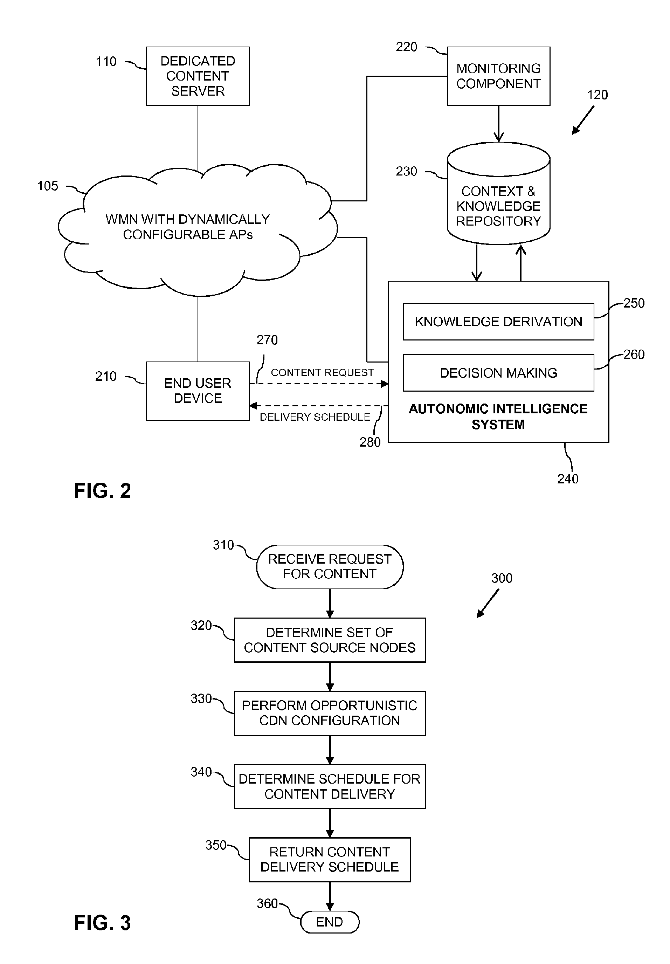

FIG. 2 illustrates a simplified block diagram of an example of one approach for providing content delivery over a wireless mesh network according to some embodiments of the present invention. In the example illustrated in FIG. 2, one proposed solution comprises a wireless mesh network, such as the WMN 105 of FIG. 1, implemented (at least in part) by way of (re)configurable nodes. A content delivery network management system, such as the CDN management system 120 illustrated in FIG. 1, is provided. The CDN management system 120 comprises, in the illustrated example, an autonomic intelligence system (AIS) 240 arranged to receive requests for content from end user devices, such as the end user device 210 illustrated in FIG. 2, and to configure an opportunistic CDN overlay on top of the WMN 105 for delivery of the requested content to the end user device 210. The AIS 240 may be implemented in any suitable manner. For example, the AIS may be implemented by way of computer program code executing on one or more processing units, such as illustrated generally at 122 in FIG. 1. Such computer program code may be stored within one or more non-transitory computer program products, for example as illustrated generally at 124 in FIG. 1.

As used herein, the expression non-transitory will be understood to refer to the non-ephemeral nature of the storage medium itself rather than to a notion of how long the stored information itself may persist in a stored state. Accordingly, memories that might otherwise be viewed, for example, as being volatile (such as many electronically-erasable programmable read-only memories (EPROM's) or random-access memories (RAM's) are nevertheless to be viewed here as being "non-transitory" whereas a signal carrier in transit is to be considered "transitory" notwithstanding that the signal may remain in transit for a lengthy period of time.

A user's request for content, such as multimedia content or the like, is forwarded from the end user device 210 over the WMN 105 to the AIS 240. The AIS 240 may then determine an appropriate 'solution' regarding how to meet the user's request. FIG. 3 illustrates a simplified flowchart 300 of an example of a method of providing content delivery over a wireless mesh network, such as may be implemented within the AIS 240. In particular, in the example illustrated in FIG. 2, the method of FIG. 3 may be implemented within a decision making component 260 of the AIS 240.

The method starts at 310 with the receipt of a request for content from an end user device, such as the end user device 210 illustrated in FIG. 2. Next, at step 320, a set of content source nodes for providing the requested content is determined. Opportunistic CDN configuration is then performed at step 330 in order to configure an opportunistic CDN overlay on top of the WMN 105 for delivery of the requested content to the end user device 210 from which the request was received.

As will be appreciated by a skilled artisan, multimedia content such as video is often split into segments or chunks. Where such content is 'streamed', an end user device may start reproduction (e.g. playback) of the received content before all of the requested content has been received. Accordingly, when different chunks of requested content are to be delivered from different locations (e.g. from different nodes within the WMN 105 and/or the content origin server 110), because of the variations in delivery times from the different locations, it is important to derive a schedule for the content delivery that provides information regarding which chunks of requested content should be requested from which locations and when.

Thus, in the example illustrated in FIG. 3, the method further comprises determining a schedule for content delivery at step 340. The determined content delivery schedule is then 'returned' to the requesting end user device to enable the end user device to retrieve the requested content from the appropriate content source nodes, at step 350. This schedule may be in the form of a table where all content segments are listed in the order in which they need to be retrieved, as well as locations from which delivery needs to be requested (IP address or URL of the network node). The method then ends, at step 360.

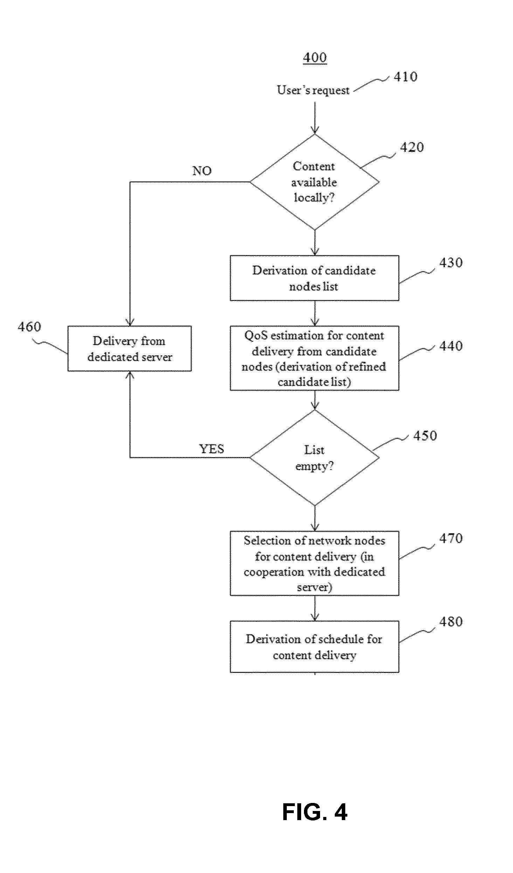

Referring now to FIG. 4, there is illustrated a simplified flowchart 400 of an example of a method of determining a set of content source nodes, for example such as may be performed within step 320 of the method of FIG. 3. The method of FIG. 4 starts at 410, for example following receipt of a user's request for content. Next, at step 420, it is determined whether at least a part of the requested content is available locally within the WMN 105, for example stored within an area of memory of one or more of the WMN nodes 150. As described in greater detail below, the CDN management system 120 may keep track of where content is stored within the storage pool of the WMN 105. If no segments of the requested content are locally stored, i.e. within the storage pool of the WMN 105, it will be necessary for the requested content to be delivered from one or more content origin server(s) 110.

Accordingly, in such a case, the method moves on to step 460, where the set of content source nodes is determined as comprising the content origin server(s) 110. However, if one or more segments of the requested content are locally stored within the storage pool of the WMN 105, then it may be appropriate for those content segments to be delivered from WMN nodes 150 storing those segments.

Accordingly, where at least some of the requested content is stored locally, the method moves on to step 430, where the WMN nodes 150 on which segments of the requested content are stored are appended to a list of candidate nodes for content delivery. Next, at step 440, the list of candidate nodes is refined in accordance with a Quality of Service (QoS) estimation for each candidate node in order to determine their suitability for delivering the requested content. For example, nodes that are located a large distance in the network topology from the WMN node, to which the requesting end user device 210 is connected, (e.g. more than, say, 5 wireless 'hops' away), or nodes whose interfaces (or delivery engine) are congested or near congestion, may be excluded from the list of candidate nodes.

In some example embodiments, the list of candidate nodes may further be refined based on knowledge of a mobility pattern for the end user device 210. For example, if a user's mobility pattern is well known (such as described in greater detail below), then the list of candidate nodes may be adapted to the end user device's (predicted) movement patterns to take into account the end user device moving within the WMN 105 during content delivery. For example, if a user's predicted movement indicates that the end user device is likely to move towards certain WMN nodes 150 and/or away from certain WMN nodes 150, this may be taken into consideration when selecting which WMN nodes 150 to include in the set of content source nodes (i.e. to include within the refined list of candidate nodes). In time the AIS 240 may gather enough knowledge (as described in greater detail below) about which WMN nodes 150 may be considered as actual candidates for content delivery when content is requested from a particular location, at a particular time and by a user with known mobility pattern, resulting in faster decision making.

After QoS capabilities of candidate nodes are inspected, the new refined list of candidate nodes is produced. If this list is empty, at step 450, no suitable WMN nodes are available for delivering the requested content. Accordingly, the method moves on to step 460 where the set of content source nodes is determined as comprising the content origin server(s) 110. However, if the refined list of candidate nodes is not empty, the method moves on to step 470, where a selection of the candidate nodes within the refined list are selected as content source nodes from which the requested content is to be delivered. This selection may be guided by the desire that content delivery needs to be performed with as few reconfigurations of the underlying network (described in greater detail below) as possible, and with minimum impact on other network services. It may also be important to limit the number of nodes which will participate in content delivery. Too many nodes from which the content's segments need to be requested can result in unstable delivery and jitter problems.

In some examples, the candidate nodes may first be sorted by the number of content segments stored on them. Next, the candidate nodes with longest continuous lists of content segments are found. A subset of the candidate nodes may then be selected in a way which minimizes the number of nodes, minimizes the schedule length (jumping from node to node in order to retrieve different segments), and maximizes the number of content segments delivered form the local storage pool of the wireless network. The set of content source nodes from which the requested content is to be delivered may be then defined as the selected subset of candidate nodes. If any part of the requested content is unable to be delivered from a candidate node, one or more content origin server(s) 110, as required, may be included within the set of content source nodes to ensure all parts of the requested content are deliverable to the end user device 210.

After the set of content source nodes from which the requested content is to be delivered is derived, the method ends.

Referring back to FIG. 3, having determined the set of content source nodes for providing the requested content, opportunistic CDN configuration is then performed. The configuration of an opportunistic CDN on top of the WMN 105 in this manner represents a logical and physical reconfiguration of parts of the underlying CDN and wireless network systems. Such reconfiguration may be implemented in a way that enables cooperation and coordination among the WMN nodes 105 with stored content, and the content origin server 110 located on the core side of the network. In some example embodiments of the present invention, such reconfiguration of the underlying systems may comprise:
- Opportunistic creation of additional backhaul links for bridging WMN clusters; and/or
- Opportunistic reconfiguration of WMN nodes 150 from APs into GWs and back.

For example, an algorithmic procedure may be implemented for checking whether or not new GWs can be included into the wireless network topology in order to optimize delivery of content's segments from content origin servers. Additionally/alternatively, an algorithmic procedure may be implemented for the creation of opportunistic bridges between different WMN clusters, for example checking whether or not the content segments stored in different WMN nodes can be delivered to the requesting end user device while avoiding utilization of GWs (hot spots of the WMN 105). The resulting opportunistic CDN overlay will consist of N nodes which include content source nodes, new GWs (K) and nodes whose interfaces need to be reconfigured in order to enable bridging between different WMN clusters.

FIG's 5 and 6 illustrate simplified flowcharts 500, 600 of examples of methods for performing opportunistic CDN configuration, such as may be implemented by AIS component 240 of the CDN management system 120 of FIG's 1 and 2. It is contemplated that, in some example embodiments of the present invention, both of the methods illustrated in FIG's 5 and 6, or variations thereof, may be implemented. However, it is equally contemplated that, in some alternative embodiments, either one of the methods illustrated in FIG's 5 and 6, or variations thereof, may be implemented in isolation.

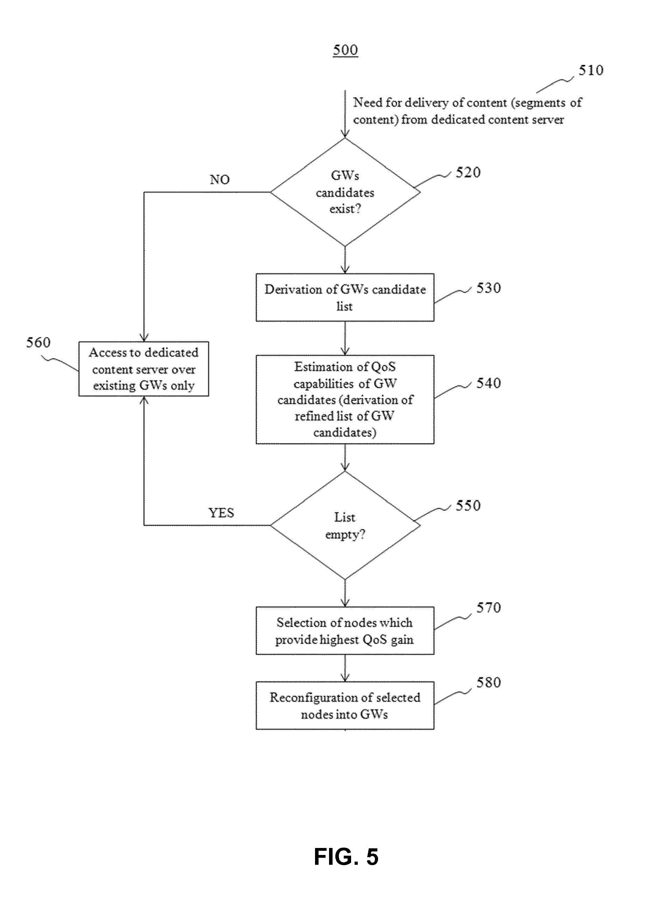

Referring first to FIG. 5, there is illustrated a simplified flowchart 500 of an example of a method for performing opportunistic reconfiguration of WMN nodes 150 from APs into GWs. In the illustrated example, the method of FIG. 5 is initiated when at least some of the requested content is required to be delivered from at least one content origin server 110; for example when the set of content source nodes for providing the requested content comprises at least one content origin server 110.

Accordingly, the method of FIG. 5 starts at 510 with the need for delivery of at least some of the requested content to be delivered from one or more content origin servers 110. Next, at 520, it is determined whether any WMN AP nodes are capable of being (automatically) reconfigured into gateways. If no such WMN APs are identified, the method moves on to 560, where access to the at least one content origin server 110 is provided by existing WMN GW nodes. However, if one or more WMN AP nodes are capable of being reconfigured into gateways, the method moves on to step 530 where the identified WMN AP nodes capable of being reconfigured into gateways are placed into a GW candidate list. Next, at step 540, the list of candidate GWs is refined in accordance with a Quality of Service (QoS) estimation for each candidate GW in order to determine their suitability for enabling delivery of requested content from one or more content origin server(s) 110 to the end user device 210.

For example, candidate GW nodes that are located a large distance in the network topology from the WMN node to which the requesting end user device 210 is connected (e.g. more than, say, 5 wireless 'hops' away), or nodes whose interfaces (or delivery engine) are congested or near congestion, may be excluded from the list of candidate GW nodes. In some example embodiments, the list of candidate GW nodes may further be refined based on knowledge of a mobility pattern for the end user device 210. For example, if a user's mobility pattern is well known (such as described in greater detail below), then the list of candidate GW nodes may be adapted to the end user device's (predicted) movement patterns to take into account the end user device moving within the WMN 105 during content delivery. For example, if a user's predicted movement indicates that the end user device is likely to move towards certain WMN nodes 150 and/or away from certain WMN nodes 150, this may be taken into consideration when refining the list of candidate GW nodes. In time the AIS 240 may gather enough knowledge (as described in greater detail below) about which WMN nodes 150 may be considered as actual GW candidates when content is requested from a particular location, at a particular time and by a user with known mobility pattern, resulting in faster decision making.

Having derived a refined the list of candidate GW nodes, if the list of candidate GW nodes is empty, at 550, the method moves on to step 560, where access to the at least one content origin server 110 is provided by existing WMN GW nodes. However, if the list of candidate GW nodes comprises one or more candidate GW nodes, the method moves on to 570, where one or more of the candidate GW nodes are selected, for example based on a highest QoS gain relative to existing GW nodes. The selected candidate GW nodes are then reconfigured from WMN AP nodes to WMN gateway nodes, at 580.

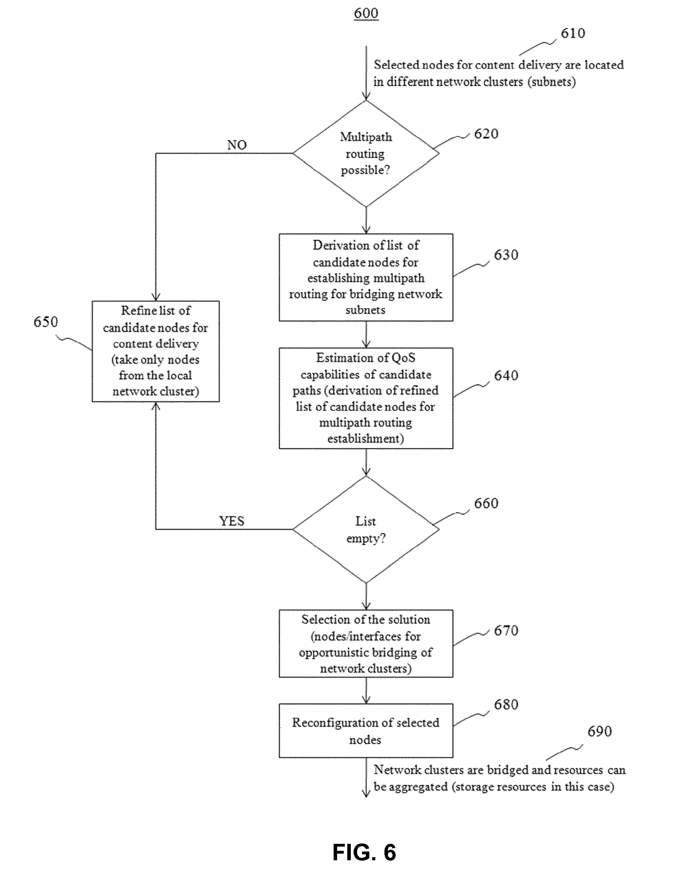

Referring now to FIG. 6, there is illustrated a simplified flowchart 600 of an example of a method for performing opportunistic creation of additional backhaul links for bridging WMN clusters. In the illustrated example, the method of FIG. 6 is initiated when at least some of the requested content is required to be delivered from at least one WMN node 150 that is not within a local WMN cluster for the end user device 210 requesting the content. Accordingly, the method of FIG. 6 starts at 610, with at least one of the selected nodes for content delivery being located in a different WMN cluster to that to which the request end user device is connected. Next, at 620, it is determined whether multipath routing is possible. For example, the AIS 240 may have access to information identifying potential bridges between WMN nodes in different WMN clusters. If there are no means for bridging between selected nodes for content delivery that are located in different WMN clusters to that to which the request end user device is connected, then the method moves to step 650, where the set of content source nodes from which the requested content is to be delivered is refined such that the requested content is only delivered from WMN nodes within the local cluster for the end user device and/or from one or more content origin servers 110.

Conversely, if bridging between selected nodes for content delivery located in a different WMN cluster to that to which the request end user device is connected is possible, the method moves on to step 630 where a list of candidate bridging nodes for establishing bridging between WMN clusters is derived. Different bridging links and multipath schemes will have different QoS capabilities, for example based on current status of links included into the multiple paths, and different impact on already existing communication within the WMN.

Accordingly, QoS capabilities of candidate bridging paths are estimated, at step 640, and the list of candidate bridging nodes for establishing bridging between WMN clusters is refined. Next, at 660, if no bridging can be established with a required QoS, or with low impact on existing communication within the WMN, such that the refined candidate list is empty, the method moves on to step 650, where the set of content source nodes from which the requested content is to be delivered is refined such that the requested content is only delivered from WMN nodes within the local cluster for the end user device and/or from one or more content origin servers 110. However, if the refined list of candidate bridging nodes is not empty, the method moves on to 670 where an opportunistic CDN overlay solution is selected in accordance with the candidate bridging nodes within the refined list. The relevant WMN nodes for implementing the selected solution are then reconfigured to create the bridging links there between, at step 680, thereby implementing the opportunistic CDN overlay, and enabling the aggregation of stored content within the WMN. The method of FIG. 6 then ends.

In some example embodiments it is contemplated that if the requesting end user device moves between WMN clusters, then careful selection of delivery nodes may not need bridges between wireless clusters. For example, this may be achieved for end user device whose mobility patterns are highly predictable in space and time.

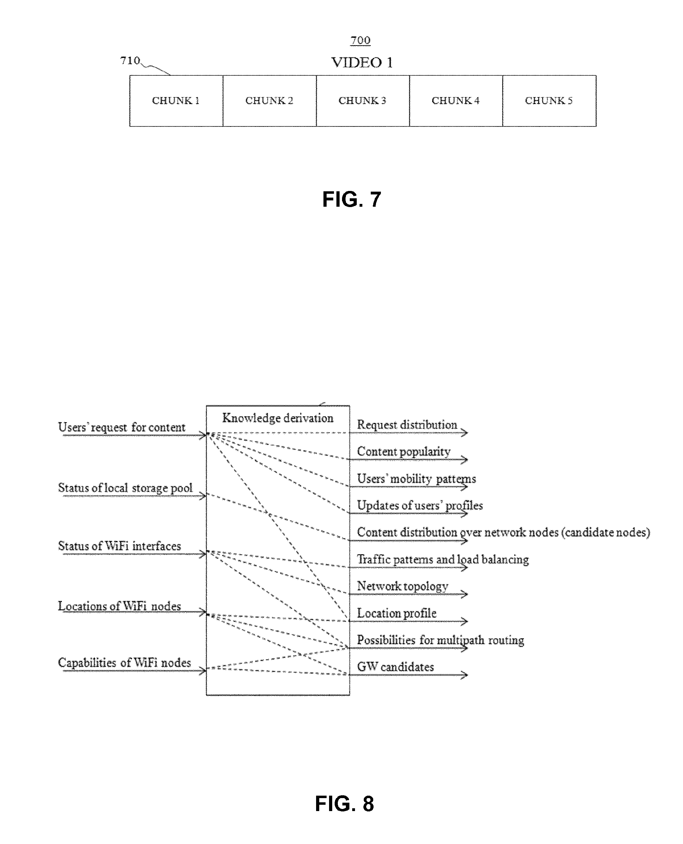

Referring back to FIG. 1, an example of a method of performing opportunistic CDN configuration will be described with reference to the content delivery system 100. A first end user device requests a content object, for example comprising video file, Video 1. FIG. 7 illustrates a simplified block diagram of the video file Video 1, which comprises five chunks or segments. In addition to Video 1 being stored (in its entirety) within the source origin server 110, the five chunks of Video 1 are distributed within the WMN 105 in the following manner:
- Chunk 1 is stored in the WMN AP2;
- Chunks 2 and 4 are stored in the WMN AP4 and WMN AP3;
- Chunk 3 is not stored in the local storage pool of the WMN so it needs to be delivered from dedicated server which is located in the core side of the network; and
- Chunk 5 is stored in the WMN AP5 and WMN AP1.

As previously described, the WMN 105 is divided into two clusters:
- GW1 cluster includes WMN AP1, 4 and 7;
- GW2 cluster includes WMN AP2, 3, 5, 6 and 8.

In legacy deployments, content requests can be fulfilled only by the nodes which are on route from the requesting end user device to the content origin server 110. As such, in the case of a first end user device connected to WMN AP7 requesting Video 1, the first end user device would receive chunks 1 and 3 from the content origin server 110 over the GW1, chunks 2 and 4 from the WMN AP4 and finally chunk 5 from the WMN AP1. In the case of a second end user device connected to WMN AP8 requesting Video 1, the second end user device would receive chunks 1, 3 and 5 from the content origin server 110 via GW2, while chunks 2 and 4 could be delivered from the WMN AP3 which is on route from the second end user device to the core network.

Some state of the art CDN over WMN systems would allow collaboration among WMN nodes from the same clusters in order to enable them to address each other's cache misses. In such state of the art CDN over WMN systems, the second end user device would be able to receive chunk 1 from the WMN AP2 and chunk 5 from the WMN AP5. In this manner, the cache hit rate of the local storage pool in the WMN cluster (subnet) is increased, whilst the content origin server 110 is offloaded as well as the traffic in the core side of the network. However, in the illustrated example, such inter-sub-cluster communication is still routed via WMN GW2. Thus, links towards WMN GW2 are still utilized for delivery of 3 out of 5 chunks of the requested video, so the WMN capacity for other traffic is reduced while these chunks are delivered. Furthermore, the problem of different delivery tree lengths for different chunks can result in significant jitter related problems and for some chunks delay can be unacceptable (for example delivering chunk 5 from the WMN AP5 to the user 2 over the WMN GW2 creates a path which length is 6 wireless hops which can result in significant delay).

Creation of an opportunistic CDN over WMN overlay, as hereinbefore described, addresses these problems from which the legacy and state of the art approaches suffer. The opportunistic overlay may be created across different (pre-configured) clusters of the WMN topology. Cooperation among WMN nodes 150 from different clusters is provided with opportunistic creation of additional WMN backhaul links which bridge the WMN GW clusters together. Opportunistic backhaul link creation may take into account one or more of the following:
- Availability of dormant backhaul radio interfaces on WMN nodes which belong to different WMN clusters while being in communication range;
- Existence of the multipath aware routing protocol and packet forwarding mechanisms; and/or
- Spatial distribution of radio channels used for backhaul communication, allowing channel assignment to the opportunistic backhaul links which will not impose much interference with existing backhaul links.

If the requested content is distributed across WMN nodes 150 belonging to different WMN clusters (as in the above example), then the AIS 240 (FIG. 2) may perform suitability determination for creation of the opportunistic backhaul links for bridging the WMN clusters. If the constraints listed above are met, additional links may be created. The AIS 240 may select the most appropriate set of WMN nodes 150 from which the requested content will be delivered while taking into account one or more of the following:
- the set of nodes has to be able to provide all chunks of the requested video content (dedicated server is a backup for those chunks which are not locally stored in the WMN storage pool);
- delivery schedules of involved nodes has to be able to fulfil delivery of requested chunks when requested;
- delivery tree length (number of wireless hops on a delivery path) for every content's chunk needs to be less than defined threshold in order to limit delay and jitter effects; and/or
- congested backhaul links (especially those established by the WMN GWs) need to be avoided (if possible) when the content's chunks are delivered to the requesting users.

Different opportunistic overlays can be created for different requesting users (groups of users) if sets of WMN nodes which satisfy the upper requirements are different.

For example, in the above example, an opportunistic backhaul link 170 between WMN AP7 and WMM AP5 may be created without interference. Now, GW1 and GW2 WMN clusters are bridged together and represent one aggregated storage pool. In the case when only links GW1-AP1, GW2-AP2 and GW2-AP3 are considered as possible bottlenecks for content delivery, the first end user device request Video 1 can receive Video 1 chunks according to the following simplified schedule:
- Chunk 1 from WMN AP2;
- Chunks 2 and 4 from WMN AP4;
- Chunk 3 from the content origin server 110; and
- Chunk 5 from WMN AP5 (with AP1 as backup).

As a result, the first end user device is now able to get chunk 5 from WMN AP5, which is one wireless hop away, instead of AP1, which is 2 hops away.

In the case where an opportunistic backhaul link 170 between WMN AP7 and WMM AP5 is created, the second end user device requesting Video 1 can receive Video 1 chunks according to the following simplified schedule:
- Chunks 1, 3 and 5 from the content origin server 110 (with AP2 as backup for Chunk 1 and AP5 and AP1 as backup for Chunk 5); and
- Chunks 2 and 4 from WMN AP3.

In this scenario, the second end user device still has the same schedule as in case when there is no opportunistic overlay. However if a second opportunistic backhaul link 175 is configured between WMN AP5 and WMN AP8 (e.g. when an interface of the AP5 can be shared among two backhaul links, or the first and second end user devices do not request the content or the chunks at the same time), the second end user device requesting Video 1 can receive Video 1 chunks according to the following simplified schedule:
- Chunk 1 from WMN AP2
- Chunks 2 and 4 from WMN AP3;
- Chunk 3 from the content origin server 110; and
- Chunk 5 from WMN AP5 (with AP1 as backup).

This new overlay avoids delivery from dedicated server (and therefore avoids burdening GW links) for all of the video chunks which are in the aggregated storage pool of the GW1 and GW2 WMN clusters (note that Chunk 3 is only available from the content origin server 110 in this example).

The opportunistic overlay also has the ability to reconfigure candidate APs into the new WMN GWs. If we consider AP4, AP5 and AP6 to be candidates for GWs (for example these WMN nodes having cable connection to the Internet/Core network 130 but their cable interface is currently disabled), the two previously created opportunistic overlays can additionally reduce delivery tree length for video 1's chunks which are not locally stored in the aggregated WMN storage pool. For example, AP5 may be reconfigured into a new GW, which would bring the delivery of Chunk 3 two wireless hops closer to the first end user device connected to AP7. If AP6 is reconfigured into a new GW, the second end user device connected to AP8 could receive Chunk 3 over only two wireless hops. If the delivery tree length needs to be further reduced, other chunks, whose sources are more than two wireless hops away from the user 2, can also be delivered over the temporally added GWs. Addition of new GWs can also result in reconfiguration of existing GWs (GW1 and GW2) into APs if the request distribution and other traffic in the WMN permit it. If the first and second end user devices are actually groups of end user devices requesting the same file from the same location, then addition of new GWs (reconfiguration of AP5 and AP6) provides not only delivery tree length reduction, but also takes over the load for delivering Chunk 3 from GWs 1 and 2. In this manner, WMN capacity may be increased on an ad hoc basis when and where required.

Thus, a request for multimedia content from an end user device 210 is forwarded over the WMN 105 towards the AIS 240 (FIG. 2), whose task is to select an appropriate solution regarding how to meet the end user device's request.

Possible solutions may comprise:
- Forward the request to the content origin server 110, which is located in the core side of the network. This solution may be enforced when the requested content is not available (in whole or partially) within the storage pool of the WMN 105, or when requested content is located in one or more region(s) of the WMN that is/are far away (or currently unavailable) from that part of the WMN where the request is made. This may be done in order to avoid creation of long wireless delivery paths which typically suffer from poor QoS). The delivery process may be optimized by performing reconfiguration of GW locations, or by dynamic and context aware inclusion of additional GWs into the WMN topology.
- The request is completely addressed from the local aggregated storage pool of the WMN 105. This may be achieved when all segments of the requested content are located in the local storage pool (caching area of WMN), and are reachable from requesting device's location without significant impact on QoS of the delivery process. If segments of the requested content are located in different nearby wireless networks (subnets), Autonomic intelligence system 240 may opportunistically bridge different wireless networks by reconfiguring WMN nodes 150. Appropriate interfaces of selected WMN nodes may be reconfigured into an operating mode which enables creation of wireless links among nodes of different WMN clusters. When bridging links are created, a multipath routing algorithm may be used for content delivery.
- The request may be addressed from an aggregated storage pool of the content origin server 110 and local caches of the WMN nodes 150. This solution may be used when some segments of the requested content are not cached in the local storage pool of the WMN nodes, or if some segments are stored in nodes which are unreachable or too far away from the network location from which the request is sent. In this case, AIS 240 may optimize delivery of content segments from the content origin server 110 by introducing new GWs into the WMN topology, thus bringing the content origin server 110 closer to the requesting device (from hop count point of view). Also, different WMN clusters may need to be bridged in order to make locally stored content segments available to the requesting user. Therefore, this solution is a combination of the two solutions which are previously listed.

The AIS 240 may selects the appropriate solution (as listed above), instruct necessary reconfigurations of the underlying WMN 105 (creation of wireless bridges, reconfiguration of wireless stations into GWs and vice verse) and derive a delivery schedule for content segments which is then sent to the requesting device whose content reproducing application can retrieve necessary content's segments in order and from listed locations. The request may be detected by the monitoring system, and recorded into the Context and knowledge repository 130 for further use in knowledge derivation.

Referring back to FIG. 2, the CDN management system 120 in the illustrated example further comprises a monitoring component 220. The monitoring component 220 gathers all necessary contextual parameters from the WMN 105, as well as parameters related to user behaviour (mobility, requests, viewing patterns etc.). These contextual parameters are stored into A contextual repository/database 230. Stored parameters form a history of contextual changes, which may be used by the AIS 240 for knowledge derivation, as illustrated in Figure 8 and described in greater detail below.

Through knowledge and context history acquisition from the Context and knowledge repository 230, the AIS 240 is provided with knowledge of where content is placed, and of the status of storage space within WMN nodes 150. Furthermore, the monitoring component 220, which populates the Context repository 230, may provide the AIS 240 with the current status of all nodes 150 and links 160, 170, 175 within the WMN 105. The history of gathered context parameters' values is used for derivation of knowledge regarding traffic patterns in the backhaul of the WMN 105, which may be used for predicting the load distribution among WMN links 160, 170 and 175 for CDN services as well as other services requested by users.

In this manner, the CDN management system 120 is able to record every user's request for multimedia content offered over the content delivery system 100. Every user may be provided with a service profile. This profile can contain basic information regarding, say, the user's name and address, and may also be enhanced with the user's preferences regarding multimedia content (preferred type of content, genres, artists etc.) and patterns of the user's behaviour (mobility, when and where specific requests occur, content viewing pattern, etc.).

In addition, multimedia content may be profiled. Within this profile, a basic set of content related information can be provided (e.g. duration, size, number of chunks, level of quality, producer, genre, artist etc.). Such a profile of content may also be enhanced with information regarding its connections with other content (e.g. by genre, artist, thematic etc.), users who have requested it, comments and critics etc.

It is also contemplated in some examples to derive a profile of locations at which the WMN nodes 150 are installed. Since wireless networks can span across wide areas of cities (or entire cities) certain parts of the WMN topology may cover very distinctive areas such as university campuses, parks, residential districts, business areas, etc. A profile of the location may also be derived by the dominant profile of users in that area. Deriving connections between these profiles (user, content and location) increases context awareness of the CDN over the wireless network system. These profiles and connections between them may be used for configuring the opportunistic CDN overlay over the WMN 105.

In the illustrated example, the AIS 240 comprises a knowledge derivation component 250 arranged to perform knowledge derivation from the history of gathered contextual parameters. Different machine learning techniques may be used including clustering, regression (linear and logistic) and regularization both supervised and unsupervised. These techniques may be used for recognition of patterns in changes of the monitored contextual parameters, which may be further used for predicting problematic situations before they become acute. Derived knowledge/patterns may be stored into the Context and knowledge repository 230.

Referring now to FIG. 8, there is illustrated a simplified diagram of the usage of different sets of context parameters for the derivation of different knowledge. Used contextual parameters may include, by way of example only:
- User's request:
   ○ Location;
   ○ Time;
   ○ Requested content;
   ○ Used device;
- Status of local storage pool
   ○ List of content segments cached in every WMN node;
   ○ Availability of the stored content (whether or not the node is online);
   ○ Size of the storage areas at every WMN node;
- Status of wireless interfaces
   ○ Current Rx and Tx of the interface;
   ○ Packet drop count;
   ○ Channel used;
   ○ MAC (Media Access Control) or IP (Internet Protocol) address of the interface with which the link is established;
   ○ Signal to noise and interference ratio;
   ○ Detected delay over the established link;
   ○ Detected jitter in packet transfer over established link;
   ○ Capacity of the interface and established link;
- Information about location where WMN nodes are installed
   ○ GPS (Global Positioning System) coordinates;
   ○ Location profile - characterization (i.e. business area, residential area, public area etc.);
- Capabilities of WMN nodes
   ○ Number of interfaces (wireless and cable);
   ○ Technologies supported by interfaces (Ethernet, 802.11 etc.);
   ○ Connection to cable infrastructure (station can be reconfigured into GW automatically);
   ○ Content caching ability;
   ○ Remote re-configurability.

Besides these listed contextual parameters, predefined parameters may also be used for knowledge derivation. For example, characteristics of content (length, type, number of segments, genre, artist etc.), characterization of WMN node locations (i.e. train station, school etc.) and user's profile (i.e. basic information, preferences etc.). Knowledge/patterns which may be derived by the AIS 250 may include, by way of example only:
- Request distribution for content;
- Content popularity;
- Users' mobility patterns;
- Updates of users' profiles;
- Content distribution over WMN nodes (candidate nodes);
- Traffic patterns and load balancing;
- Network topology;
- Location profile;
- Possibilities for multipath routing; and
- GW candidates.

Referring back to FIG. 1, in the illustrated example the CDN management system 120 is arranged to perform three functions:
- Managing repository of contextual parameters and derived knowledge;
- Knowledge derivation based on contextual parameters and historical derived knowledge; and
- Decision making (solution selection) and reconfiguration of WMN nodes 105 to create opportunistic CDN overlays on top of the WMN 105 for delivery of requested content to end user devices, based on the derived knowledge.

In some example embodiments of the present invention, it is contemplated that content segments may be stored within WMN nodes 150 which are on route from requesting devices to their respective dedicated GW, thereby making such requested content available for subsequent requests routed via those WMN nodes. In this manner, content may be stored within the WMN 105 in a reactive manner. Additionally and/or alternatively, in some example embodiments, it is contemplated that content segments may be proactively pre-placed on within selected WMN nodes 150 based on derived content distribution knowledge, such as predicted multimedia content popularity and request distribution.

Thus, an example of a method and apparatus for providing content delivery over a wireless mesh network have been described with reference to the accompanying drawings whereby CDN functionalities are provided via an opportunistic network that utilises virtualized resources across a predetermined number of nodes 'N' which is a subset of the total number of nodes available 'M'. The opportunistic network is bound in space and time and consists of three components: 1) reconfigurable WMN nodes, 2) the collection and storage of contextual information, and 3) autonomic intelligence that automatically determines the need for CDN functionalities, selects the number of nodes (N) for opportunistic CDN creation, and dynamically reconfigures a subset of the selected nodes to support multi-path routing. Furthermore, based on the network topology, traffic profiles and scheduling tables of the requested video streams, the autonomic algorithm may select a set of nodes K (K<N) to serve as Gateways (GW) for the Opportunistic Network Overlay towards wider Internet/core network.

Advantageously, in some examples, multiple opportunistic CDN overlays may be configured simultaneously within the WMN 105. Furthermore, it is contemplated that each opportunistic CDN overlay may be 'fine tuned' to optimize a different set of user devices and application requirements.

The invention may be implemented in a computer program for running on a computer system, at least including code portions for performing steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on computer readable storage medium or transmitted to the computer system via a computer readable transmission medium. All or some of the computer program may be provided on computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; non-volatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

In the foregoing specification, the invention has been described with reference to specific examples of embodiments of the invention. It will, however, be evident that various modifications and changes may be made therein without departing from the broader spirit and scope of the invention as set forth in the appended claims.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected', or 'operably coupled', to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an', as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an'. The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A content delivery network (CDN), management system, the CDN management system being arranged to:
receive at least one request for content from at least one end user device connected to a wireless mesh network (WMN);
determine a set of content source nodes for providing the requested content; and
configure an opportunistic CDN overlay on top of the WMN for delivery of the requested content to the at least one end user device.

2. The CND management system of Claim 1, wherein the set of content source nodes comprises at least one from a group comprising: at least one WMN node; and at least one content origin server.

3. The CDN management system of Claim 1 or Claim 2, wherein the CDN management system is arranged to determine the set of content source nodes for providing the requested content based at least partly on a determination of whether at least a part of the requested content is available locally within the WMN.

4. The CDN management system of any preceding Claim, wherein the CDN management system is arranged to determine the set of content source nodes for providing the requested content based at least partly on a Quality of Service (QoS) estimation for at least one candidate content source node.

5. The CDN management system of Claim 4, wherein the CDN management system is arranged to determine the set of content source nodes for providing the requested content based at least partly on at least one from a group comprising:
a distance in a topology of the WMN from a WMN node to which the requesting end user device is connected to at least one candidate content source node; and
a predicted mobility pattern for the end user device.

6. The CDN management system of any preceding Claim, wherein the CDN management system is arranged to configure an opportunistic CDN overlay on top of the WMN for delivery of the requested content to the at least one end user device by reconfiguring at least one candidate WMN access point node into a WMN gateway node.

7. The CDN management system of Claim 6, wherein the CDN management system is arranged to select the at least one candidate WMN access point node to be reconfigured into a WMN gateway node from a list of candidate WMN access point nodes based at least partly on a quality of service (QoS) estimation therefor.

8. The CDN management system of any preceding Claim, wherein the CDN management system is arranged to configure an opportunistic CDN overlay on top of the WMN for delivery of the requested content to the at least one end user device by creation of at least one additional backhaul link for bridging node clusters within the WMN.

9. The CDN management system of Claim 8, wherein the CDN management system is arranged to select candidate WMN nodes to be reconfigured to create the at least one additional backhaul link for bridging node clusters within the WMN from a list of candidate WMN nodes based at least partly on a quality of service (QoS) estimation therefor.

10. The CDN management system of any preceding Claim, wherein the CDN management system is arranged to derive content distribution knowledge comprising at least one from a group comprising: at least one request parameter; at least one WMN storage pool status parameter; at least one wireless interfaces parameter; at least one WMN node location parameter; at least one WMN node capability parameter; and at least one WMN node remote re-configurability parameter, said derived content distribution knowledge comprising at least one from a group comprising: request distribution for content; content popularity; at least one user mobility pattern; updates of user profiles; content distribution over WMN nodes; traffic patterns and load balancing; network topology; location profile; at least one arrangement for multipath routing; and at least one gateway candidate.

11. The CDN management system of Claim 10, wherein the CDN management system is arranged to determine a set of content source nodes for providing the requested content based at least partly on the derived content distribution knowledge.

12. The CDN management system of Claim 10 or Claim 11, wherein the CDN management system is arranged to proactively pre-place at least one data content segment within at least one selected WMN node based at least partly on the derived content distribution knowledge.

13. A content delivery system comprising the CDN management system of any of the preceding Claims.

14. A method for providing content delivery over a wireless mesh network (WMN); the method comprising:
receiving at least one request for content from at least one end user device connected to the WMN;
determining a set of content source nodes for providing the requested content; and
configuring an opportunistic content delivery network (CDN) overlay on top of the WMN for delivery of the requested content to the at least one end user device.

15. A non-transitory computer program product having executable program code stored therein for programming signal processing logic to perform a method of providing content delivery over a wireless mesh network (WMN), the method comprising:
receiving at least one request for content from at least one end user device connected to the WMN;
determining a set of content source nodes for providing the requested content; and
configuring an opportunistic content delivery network (CDN) overlay on top of the WMN for delivery of the requested content to the at least one end user device.
